# FASCICULE DE BREVET EUROPEEN

(11) **EP 1 279 298 B1**
(45) Date de publication et mention de la délivrance du brevet: **04.08.2004**
(21) Numéro de dépôt: 01929771.2
(22) Date de dépôt: 02.05.2001
(51) Int. Cl.: H04Q 3/00, H04M 3/42

(54) **DISPOSITIF DE SUPERVISION DE TERMINAUX**
SYSTEM ZUR ÜBERWACHUNG VON TERMINALS
TERMINAL SUPERVISING DEVICE

(30) Priorité: 05.05.2000 FR 0005824
(43) Date de publication de la demande: 29.01.2003
(73) Titulaire: Eads Telecom, 78180 Montigny Le Bretonneux (FR)
(72) Inventeur: MERCURIALI, Jean-Pierre, F-91400 Orsay (FR); LABAUME, Pierre, F-78130 Montigny-le-Bretonneux (FR)
(74) Mandataire: Loisel, Bertrand
(86) Numéro de dépôt international: PCT/FR2001/001339
(87) Numéro de publication internationale: WO 2001/086969

(56) Documents cités:
- WO-A-97/31491
- PETROU C. AND AL.: "An XML-based, 3-tier Scheme for Integrating Heterogenous Information Sources to the WWW" PROCEEDINGS OF THE IEEE 10TH INTERNATIONAL WORKSHOP ON DATABASE AND EXPERT SYSTEMS APPLICATIONS, - 1999 pages 706-710, XP002156322 cité dans la demande
- TAKEUCHI R ET AL: "INTERFACES FOR INTERWORKING AMONG INTELLIGENT NETWORKS, COMPUTER TELEPHONY, AND VOICE OVER IP SYSTEMS" GLOBECOM. IEEE GLOBAL TELECOMMUNICATIONS CONFERENCE AND EXHIBITION,NEW YORK, NY,US, vol. 3, 1999, pages 1916-1920, XP002900977

## Description

La présente invention concerne le domaine des communications d'entreprises, et plus particulièrement les systèmes de communications d'entreprises offrant des services diversifiés, par exemple de type multimédia

Le développement des télécommunications d'entreprise s'est effectué autour de deux axes : les réseaux de téléphonie à commutation de circuits et les réseaux informatiques à commutation de paquets.

L'architecture des réseaux privés de téléphonie s'est traditionnellement organisée autour d'un système de commutation comprenant un ou plusieurs autocommutateurs ou PABX (« Privaie Automate Branch eXchange ») reliés à un ensemble de terminaux téléphoniques. La mise en oeuvre de services téléphoniques s'effectue au moyen d'informations de signalisation échangées entre un serveur d'appel, formé d'une ou plusieurs entités du système de commutation, le ou les PABX et les terminaux téléphoniques Une famille de protocoles de communication supportant en général plusieurs services de téléphonie est nécessaire à l'établissement de tels échanges. Les protocoles RNIS (« Réseau Numérique à Intégration de Services ») fournissent un tel exemple de famille de protocoles.

Le développement de nouveaux services a conduit à intégrer dans les systèmes de commutation des serveurs supplémentaires dédiés à ces nouveaux services (par exemple serveur de messagerie vocale, serveur d'annuaire, etc.). Les protocoles de signalisation initialement conçus pour des fonctions de traitement d'appel, par exemple le protocole H.323 normalisé par l'Union Internationale des Télécommunications, ont naturellement évolué vers une intégration des nouveaux services.

D'autres protocoles de signalisation, spécifiques à des services particuliers ont été développés, comme par exemple les protocoles DAP (« Directory Access Protocol ») et LDAP (« Lightweight Directory Access Protocol ») spécifiques aux services d'annuaire, les protocoles SMTP (« Simple Mail Transfer Protocol ») et IMAP (« Internet Message Access Protocol »), spécifiques à la messagerie, ou le protocole HTTP (« HyperText Transfer Protocol ») spécifique à la navigation Web, etc Ces protocoles ne sont habituellement utilisés que pour la mise en oeuvre des services correspondants au sein de réseaux informatiques de transmission de données. Leur interfonctionnement avec des protocoles de signalisation de type téléphonie nécessite que des serveurs de nature différente soient capables de communiquer entre eux, c'est-à-dire que certains au moins des serveurs aient une connaissance des « métiers » des autres serveurs. Il en résulte une grande complexité des protocoles ainsi qu'un manque de souplesse lorsqu'on souhaite faire évoluer les fonctions offertes

D'autre part, l'utilisation de serveurs multiples dédiés à des métiers différents conduit souvent les abonnés à dialoguer successivement avec plusieurs serveurs pour accomplir une fonction donnée, ce qui affecte l'efficacité et l'ergonomie du système.

Dans le cadre du service Web, il est connu de traiter des requêtes d'utilisateur en interrogeant des sources d'information hétérogènes, de traduire les différentes réponses et de les regrouper dans une page de données d'un langage de balisage tel que HTML (« HyperText Markup Language ») ou XML (« eXtended Markup Language »), qui est retournée au logiciel de navigation Web de l'utilisateur. Ceci peut être réalisé au moyen d'architectures de type trois-tiers (« three-tier architecture »), comme décrit dans l'article de C. Petrou et al. « An XML-based, 3-tier Scheme for Integrating Heterogeneous Information Sources to the WWW », Proc. of the IEEE 10^{th} International Workshop on Database and Expert Systems Applications, 1999, pages 706-710 Ceci permet de traiter individuellement des requêtes d'utilisateur, mais non de lui présenter des services diversifiés auxquels il a accès.

Un but principal de l'invention est de rendre plus flexibles les architectures de réseaux de communication, en ce sens qu'elles permettent aisément d'intégrer de nouveaux services ou de modifier des services existants, en s'affranchissant du caractère soécifique des interfaces avec les serveurs de différents métiers tout en offrant une grande richesse fonctionnelle aux abonnés.

L'invention propose ainsi un dispositif de supervision de terminaux reliés à un réseau de communication pour fournir à des abonnés utilisant les terminaux différents services gérés par plusieurs serveurs dédiés le dispositif comprenant des moyens d'interface avec le réseau, un étage de présentation de services aux terminaux à travers lesdits moyens d'interface, un étage de multiplexage de services communiquant avec l'étage de présentation, et un étage d'accès aux services communiquant avec l'étage de multiplexage et comportant plusieurs modules d'accès associés chacun à un serveur dédié respectif. Chaque module d'accès est agencé pour délivrer des pages de données balisées à l'étage de multiplexage en réponse à des messages entrants issus du serveur dédié associé et/ou à des requêtes de page issues de l'étage de multiplexage, et pour délivrer des données de fusion à l'étage de multiplexage en réponse à des requêtes de fusion, chaque page délivrée étant associée à un abonné avec lequel l'étage de multiplexage a une session de communication en cours par l'intermédiaire de l'étage de présentation, certaines au moins des pages délivrées à l'étage de multiplexage contenant des codes de fusion se rapportant à des services. L'étage de multiplexage comprend des moyens de traitement de chaque page reçue de l'étage d'accès pour détecter les codes de fusion, adresser une requête de fusion au module d'accès associé au serveur dédié gérant le service auquel se rapporte chaque code de fusion détecté, substituer les données de fusion délivrées par ledit module d'accès en réponse à la requête de fusion à un champ de la page incluant le code de fusion détecté, et fournir la page traitée à l'étage de présentation dans le cadre de la session en cours avec l'abonné associé. Chaque page fournie à l'étage de présentation contient des données balisées décrivant, selon un format indépendant des terminaux, des éléments d'interaction avec l'abonné associé. L'étage de présentation comprend des moyens de contrôle de terminaux interprétant chaque page reçue de l'étage de multiplexage dans le cadre d'une session en cours avec un abonné utilisant l'un des terminaux de façon à générer des commandes adaptées à la présentation sur le terminal d'éléments d'interaction décrits par les données balisées de la page. L'étage de multiplexage comprend en outre des moyens de routage pour recevoir des adresses de page depuis l'étage de présentation dans le cadre d'une session en cours avec un abonné, identifier un module d'accès auquel est destinée l'adresse de page reçue et transmettre une requête de page correspondante au module d'accès identifié

Le dispositif a une architecture de type trois tiers, et joue un rôle d'agent « proxy » vis-à-vis des terminaux pour les différents services gérés par les serveurs dédiés. Ces services sont multiplexés par un l'étage central qui tient des sessions avec des abonnés sans avoir de connaissance particulière sur les services gérés par les serveurs dédiés ni sur les caractéristiques physiques des terminaux.

L'étage de multiplexage combine des éléments relevant de différents métiers dans les données qui sont fournies pour la présentation des services aux abonnés. Pour cela, il associe simplement des codes de fusion déterminés à des modules d'accès auxquels il adresse les requêtes permettant de compléter les pages précédemment reçues. Ce sont ces modules d'accès qui, de façon autonome ou en liaison avec serveurs dédiés associés, incorporent une connaissance des métiers correspondants pour fournir les données requises par l'étage de multiplexage.

Il est donc relativement alsé d'enrichir ou de faire évoluer le système L'ajout ou la substitution de nouveaux serveurs dédiés fonctionnant selon des protocoles spécifiques n'implique pas de remise en cause des protocoles utilises par ailleurs dans le système

Dans une réalisation préférée du dispositif, les données balisées contenues dans certaines au moins des pages fournies à l'étage de presentation décrivent, en plus des éléments d'interaction avec l'abonné associé au moins un lien entre l'un desdits éléments d'interaction et une adresse de page Les moyens de contrôle de terminaux de l'étage de présentation sont alors agencés pour associer chaque lien d'une page reçue de l'étage de multiplexage dans le cadre d'une session en cours avec un abonné utilisant l'un des terminaux à un événement pouvant se produire au niveau du terminal, et pour retourner l'adresse de page dudit lien à l'étage de multiplexage dans le cadre de ladite session en réponse à une occurrence dudit événement.

D'autres particularités et avantages de la présente invention apparaitront dans la description ci-après d'exemples de réalisation non limitatifs, en référence aux dessins annexés, dans lesquels :
- la figure 1 est un schéma illustrant un exemple de réseau de telécommunication intégrant un dispositif selon l'invention ;
- la figure 2 est un schéma général d'un dispositif selon l'invention ;
- la figure 3 est un schéma synoptique d'un module de l'étage d'accès du dispositif ;
- la figure 4 est un schéma synoptique de l'étage de multiplexage du dispositif ;
- la figure 5 montre un exemple de mire affichable sur un terminal relié au reseau.

Dans l'exemple de réalisation décrit ci-après, des équipements terminaux de différents types ont accès, par l'intermédiaire d'un réseau de communication d'entreprise et d'un dispositif selon l'invention, à des services diversifiés de téléphonie, de journal des appels, d'annuaire, de messagerie unifiée (c'est-à-dire vocale ou électronique), de navigation Web sur un réseau Internet ou Intranet qui sont fournis par un ensemble de serveurs dédiés reliés au réseau.

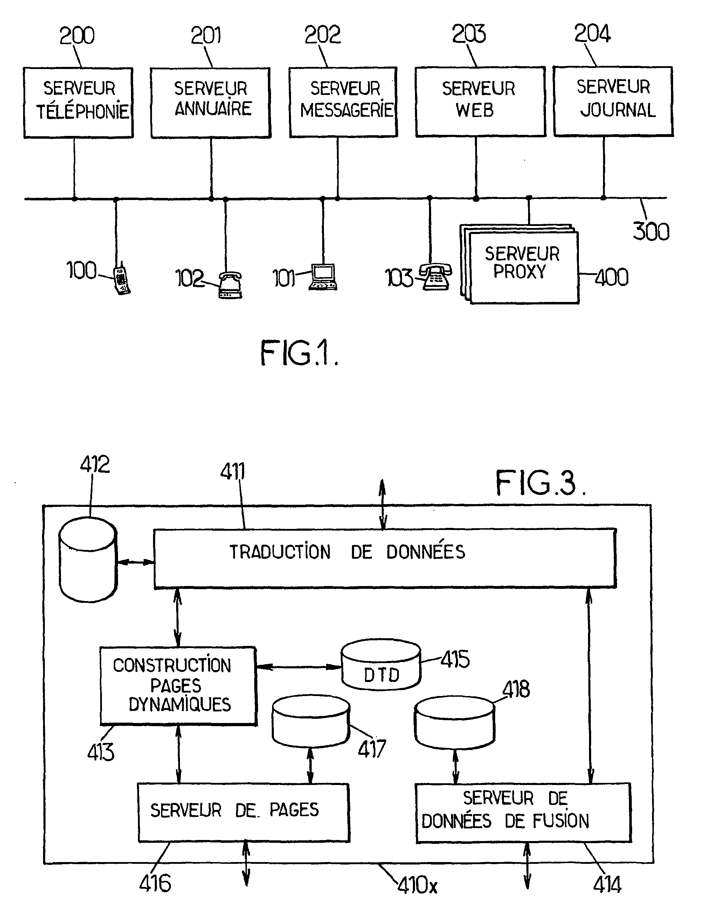

La figure 1 montre les terminaux de différents types (par exemple poste mobile 100, micro-ordinateur 101, poste RNIS doté d'un adaptateur IP 102, poste natif IP 103) raccordés à un réseau de communication en mode paquet 300 fonctionnant selon le protocole IP (« Internet Protocol ») Le réseau 300 peut être un réseau local (LAN, « Local Area Network ») dont est équipée une organisation pour fournir des services de transmission de données aux détenteurs des terminaux 100-103. Il est par exemple constitué de plusieurs sous-réseaux de type Ethernet entre lesquels la commutation des paquets IP est effectuée de façon classique par des routeurs non représentés.

Plusieurs serveurs, dédiés aux services considérés, sont par ailleurs connectés au LAN 300 : un serveur de téléphonie 200, un serveur d'annuaire 201, un serveur messagerie unifiée 202, un serveur de navigation Web 203, ainsi qu'un serveur journal des appels téléphoniques 204.

Un dispositif selon l'invention 400, dit « serveur proxy », est également raccordé au LAN 300. Ce dispositif remplit une fonction de proxy, c'est-à-dire que, pour accéder aux services gérés par les serveurs dédiés 200-204 du réseau 300, les terminaux 100-103 ne peuvent ouvrir de session qu'avec le dispositif 400. D'autre part, la signalisation entrante relative à ces services ne peut être adressée aux terminaux que par l'intermédiaire du dispositif 400.

Bien entendu, il est possible que certains des serveurs 200-204, 400 soient réalisés dans une plate-forme commune. Par exemple, les serveurs de téléphonie et de journal 200, 204 seront fréquemment dans le même équipement de réseau. Le serveur proxy 400 pourra aussi être dans le même équipement que l'un des serveurs dédiés, par exemple le serveur de téléphonie 200.

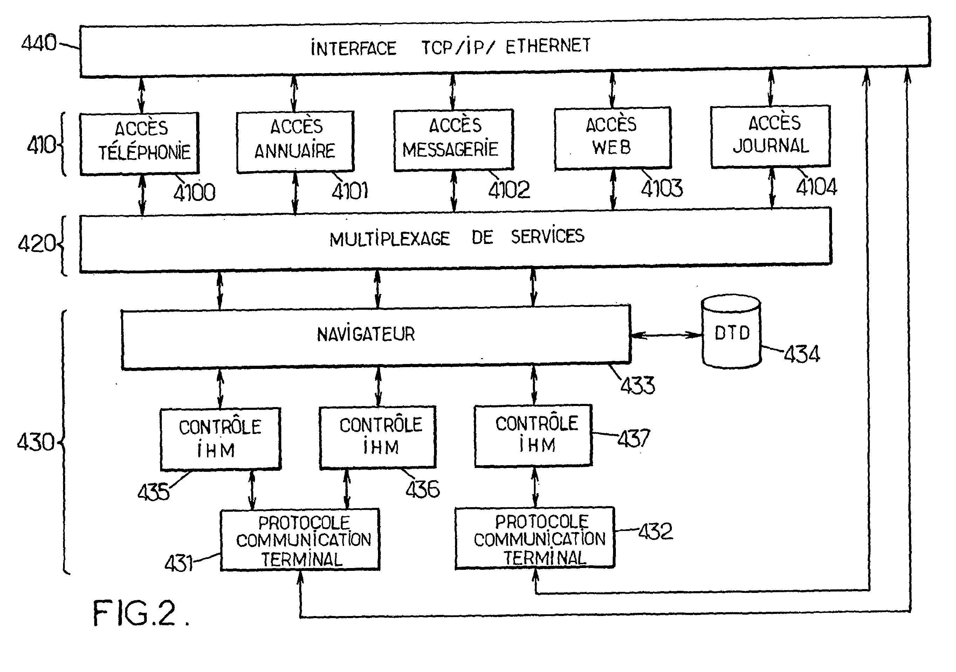

Le serveur proxy 400 a une architecture de type trois-tiers dont la figure 2 montre les trois étages étage d'accès aux services 410, étage de multiplexage de services 420 et étage de présentation de services 430.

L'étage d'accès 410 (entité métier) regroupe l'ensemble des traitements spécifiques aux différents services gérés par les serveurs dédiés 200-204. Il réalise l'interface du serveur proxy 400 avec les différents serveurs dédiés 200-204, et échange des données en provenance et à destination de l'entité service 420 selon un format unifié

L'étage 410 comporte des modules d'accès 4100-4104 respectivement associés aux serveurs dédiés 200-204 avec lesquels ils sont capables de dialoguer. Chaque module d'accès 4100-4104 effectue les traitements relatifs à la fourniture d'un service par le serveur dédié associé 200-204 aux utilisateurs du réseau intégrant le serveur proxy 400. On trouve ainsi, dans l'exemple considéré, un module d'accès 4100 associé au serveur dédié de téléphonie 200, un module d'accès 4101 associé au serveur dédié d'annuaire 201, un module d'accès 4102 associé au serveur dédié de messagerie 202, un module d'accès 4103 associé au serveur dédié de navigation 203 et un module d'accès 4104 associé au serveur dédié journal des appels 204.

Dans un mode de réalisation de l'invention, chaque module d'accès 4100-4104 gère une connexion au niveau applicatif du modèle OSI avec son serveur dédié associé 200-204. La structure des données échangées et le protocole d'échange de ces données dépendent du service concerné (par exemple H.323 pour la téléphonie, LDAP pour le service annuaire, IMAP4 pour la messagerie électronique, HTTP pour la navigation, etc.).

Dans un autre mode de réalisation, une partie ou la totalité des serveurs dédiés 200-204 dialoguent directement avec les modules d'accès correspondants 4100-4104 selon une connexion d'un protocole de niveau transport, typiquement TCP (« Transmission Control Protocol »), et échangent des pages de données balisées fournissant des descriptions sémantiques d'éléments selon le langage XML (« eXtended Markup Language »). Des versions de XML, dont les descriptions de types de documents (DTD, « Document Type Description ») ont été développées pour être adaptées à différents métiers, peuvent ainsi être utilisées pour les échanges entre le serveur proxy 400 et les serveurs des métiers correspondants.

L'étage de multiplexage 420 (entité service) réalise l'interaction entre les différents services gérés par les serveurs dédiés 200-204, route les requêtes en provenance de l'étage de présentation 430 vers les modules de l'étage d'accès 410, et transmet à l'étage de présentation les données en provenance de l'étage d'accès 410. Il administre d'autre part les sessions ouvertes avec les différents terminaux gérés par le serveur proxy 400. Les traitements effectués par l'étage 420 ne prennent en compte aucune connaissance des services dont il relaie des informations, ni des caractéristiques des terminaux reliés au réseau 300

L'étage de présentation 430 (entité présentation) contient l'ensemble des moyens de connexion et de dialogue avec les différents types de terminaux compatibles avec le serveur proxy 400, et remplit la fonction de présentation des données reçues de l'étage de multiplexage 420 vers le terminal à partir duquel l'abonné destinataire des données a ouvert une session avec le serveur proxy 400. Selon leurs caractéristiques, les terminaux 100-103 peuvent être agencés pour communiquer selon différents types de protocoles de communication. Pour chacun de ces protocoles, l'étage de présentation 430 comprend un module d'interface 431, 432 qui organise l'émission et la réception des messages correspondants.

Les modules d'accès 4100-4104 et les modules d'interface terminal 431. 432 de l'étage de présentation sont reliés à un module 440 d'interface avec le LAN 300 qui accomplit les fonctions des couches 1 à 4 du modèle OSI. Dans l'exemple considéré, le module 440 gère les échanges du serveur proxy 400 selon les protocoles TCP, IP et Ethernet. Bien entendu, si le serveur proxy 400 est incorporé au même équipement que l'un des serveurs dédiés 200-204, le module d'accès correspondant pourra dialoguer directement avec ce serveur dédié sans passer par le module d'interface 440.

L'étage d'accès 410 génère des pages de données balisées, c'est-à-dire des ensembles de descriptions d'éléments dont la syntaxe est commune à l'ensemble des modules d'accès 4100-4104, qu'il transmet à l'étage de multiplexage. Dans un mode de réalisation préféré de l'invention, on utilise des pages de description de données structurées au sens XML. En variante, on pourrait utiliser des objets de type COM (« Component Object Model ») tels que proposés par la société Microsoft. L'intérêt de telles pages réside dans leur souplesse d'utilisation, et la possibilité de présenter des données dans un format qui peut être adapté par une simple opération de filtrage à tout type de terminal

Les pages XML délivrées par l'étage d'accès 410 font l'objet d'un traitement dans l'étage de multiplexage 420, qui sera décrit plus loin, avant d'être transmises à l'étage de présentation 430 Les pages XML traitées transmises à l'étage de présentation 430 contiennent des données balisées qui décrivent, selon un format indépendant des terminaux, des éléments d'interaction avec les abonnés. Certains de ces éléments d'interaction sont à présenter de façon dynamique à l'abonné concerné par la page, le mode de présentation étant défini dans l'étage 430 en fonction du type d'interface homme-machine dont est pourvu le terminal utilisé (affichage sur écran de tel type ou telle taille, signalisation sonore, messages vocaux, etc.) et éventuellement de paramètres de configuration de l'interface homme-machine définis par l'abonné

Ces éléments présentés de façon dynamique peuvent représenter un contexte d'abonné (par exemple appel entrant, poste occupé, message reçu, etc.), de l'information fournie dans le cadre d'un service (par exemple numéro d'annuaire, contenu d'un message, page Web, etc.), des champs de saisie permettant à l'abonné d'entrer des informations utiles aux serveurs (par exemple numéro d'appel, identification de fiche annuaire, message à émettre, etc.), ou des actions que l'abonné peut sélectionner à l'aide d'un événement programmable dans l'étage de présentation (actionnement d'une touche virtuelle, commande vocale, etc.). Pour ce dernier type d'élément, les données balisées de la page XML appartiennent à un lien dynamique qui pointe vers une adresse de page

D'autres éléments d'interaction décrits dans les pages XML transmises à l'étage de présentation 430 peuvent se rapporter à des événements déterminés susceptibles de se produire au niveau des terminaux et définis de façon statique, c'est-à-dire indépendamment du contexte d'abonné et des éléments dynamiques présentés. Ces événements, définis au niveau de l'étage de présentation 430, comprennent par exemple l'actionnement par l'abonné d'une touche spéciale, l'expiration d'une temporisation. etc. Les données balisées de la page XML décrivant ce genre d'élément appartiennent à un lien statique pointant vers une adresse de page.

Dans les liens précités, il est possible d'utiliser des adresses de pages similaires à des adresses URL (« Uniform Resource Locator ») couramment utilisées dans les applications de navigation, par exemple de la forme « process_id://page_id », où le champ « process_id » désigne un processus relevant d'un module d'accès 4100-4104, et le champ « page_id » désigne une page gérée par ledit processus. Certaines adresses sont complétées par un ou plusieurs champs de paramètres utiles à la production de la page désignée, les paramètres correspondants pouvant être fournis explicitement dans la page XML transmise à l'étage de présentation 430 ou récupérés dans des champs de saisie décrits dans cette page XML.

La figure 2 montre que l'étage de présentation 430 comporte un navigateur XML 433 qui analyse les pages reçues de l'étage de multiplexage 420 en liaison avec une mémoire 434 contenant la DTD définissant la syntaxe commune de ces pages. Le navigateur 433 extrait les éléments dynamiques de chaque page reçue pour un abonné, et les fournit au module 435, 436, 437 de contrôle de l'interface homme-machine du terminal utilisé par l'abonné. Plusieurs modules de contrôle 435-437 sont prévus dans l'étage 430 pour tenir compte des différents types d'IHM dont peuvent être équipés les terminaux. Ces modules 435-437 génèrent les commandes appropriées pour la présentation des éléments requis sur les terminaux, lesquelles commandes sont délivrées par l'intermédiaire des modules d'interface 431, 432 et 440. Les modules de contrôle 435-437 surveillent en outre l'occurrence des événements correspondant aux liens d'action définis dans la page XML, et avisent le navigateur 433 de la détection d'un tel événement. En réponse à la détection d'un tel événement, le navigateur 433 retourne à l'étage de multiplexage, dans le cadre de la session en cours avec l'abonné concerné, une primitive GET_URL incluant l'adresse de page du lien correspondant.

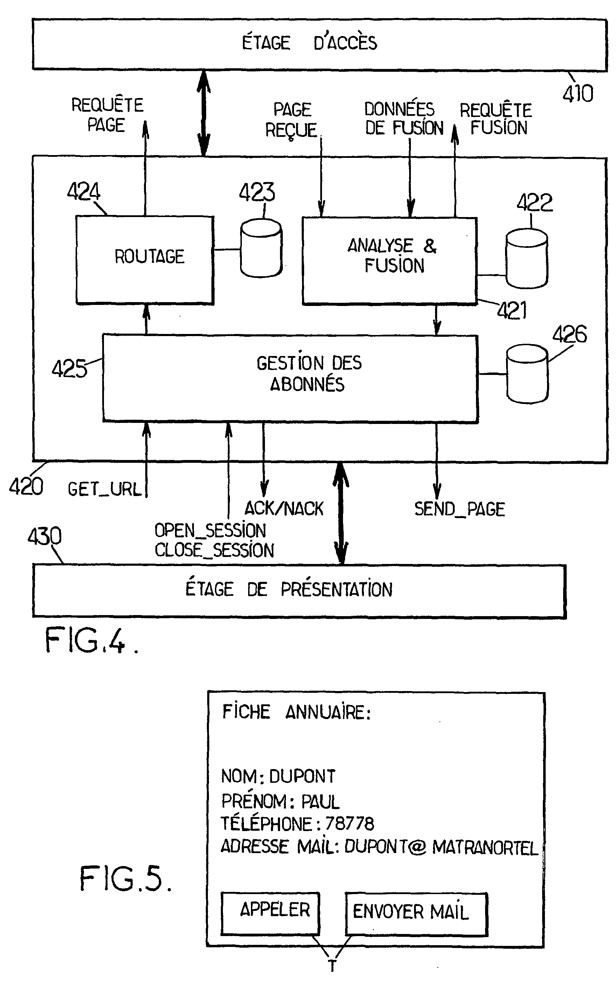

La figure 3 montre schématiquement les composants d'un module 410x de l'étage d'accès aux services 410 du serveur proxy 400. Une unité de traduction 411 réalise l'interface avec le serveur dédié 20x correspondant au module d'accès considéré 410x. L'unité 411 gère notamment l'ensemble du dialogue avec le serveur dédié, et transcrit les données reçues du serveur dans un format uniforme correspondant aux pages échangées au sein du serveur proxy 400. Pour cela, il dispose d'une table de traduction 412 qui lui permet d associer aux données échangées selon un format spécifique avec le serveur dédié des balises (« tags ») communes à l'ensemble des modules du serveur proxy 400. Une fois traduites, les données reçues sont transmises soit à une unité de construction de pages dynamiques 413 soit à une autre unité 414 du module 410x appelée serveur de données de fusion.

L'unité de construction de pages dynamiques 413 organise les données balisées au sein d'une page XML selon la structure commune définie dans la DTD 415. La page ainsi constituée est transmise à une unité 416 appelée serveur de pages qui l'associe à des informations identifiant l'abonné pour lequel elle a été construite.

Deux types de message peuvent déclencher l'envoi d'une page XML du module d'accès 410x à l'étage de multiplexage :
- un message provenant du serveur associé 20x à destination d'un abonné identifié. Dans ce cas, l'unité 413 construit la page à émettre à partir des éléments contenus dans le message de signalisation entrante, conformément à la structure commune définie dans la DTD 415 ,
- une requête de page reçue de l'étage de multiplexage pour un abonné identifié. A réception d'une requête de page, le serveur de pages 416 détermine d'abord si la page demandée est une page statique contenue dans la bibliothèque de pages 417. Si c'est le cas, il n'est pas nécessaire d'interroger le serveur dédié : le serveur de pages 416 construit la page à partir de la page statique mémorisée et des éventuels paramètres fournis avec la requête, puis adresse la page ainsi obtenue à l'étage de multiplexage 420 en indiquant l'abonné concerné. Sinon, la page est construite par l'unité 413 qui interroge le serveur dédié 20x à travers l'unité de traduction 411 lorsque des données exténeures sont nécessaires pour construire la page. L'unité 413 peut également extraire, des requêtes de page et/ou des données de la page en construction, des événements ou paramètres qui sont transmis à l'unité de traduction 411 pour faire remonter la signalisation vers le serveur dédié 20x.

Le module d'accès 410x peut d'autre part recevoir de l'étage de multiplexage 420 des requêtes de fusion qui sont traitées par le serveur de données de fusion 414. Une requête de fusion comprend un code de fusion associé à un type de données de fusion, et éventuellement des paramètres associés. Les serveurs 416 et 414 ont des fonctionnements similaires, le serveur 414 manipulant toutefois des données de fusion qui ne sont généralement pas organisées sous forme de pages. A réception d'une requête de fusion, le serveur 414 détermine d'abord si les données demandées sont des données statiques contenues dans la bibliothèque 418. Si c'est le cas, il n'est pas nécessaire d'interroger le serveur dédié : le serveur 414 récupère les données de fusion dans la bibliothèque 418, les complète avec les éventuels paramètres fournis avec la requête, puis les retourne à l'étage de multiplexage 420 en indiquant l'abonné concerné. Sinon, le serveur de données de fusion 414 interroge le serveur dédié 20x à travers l'unité de traduction 411, en indiquant d'éventuels paramètres fournis avec la requête, pour obtenir les données extérieures requises et retourner les données de fusion qui en résultent à l'étage de multiplexage 420.

Les codes de fusion sont présents dans certaines des pages retournées par les serveurs de pages 416 des modules d'accès 4100-4104 Ils sont généralement accompagnés de paramètres servant à élaborer les données de fusion. Pour faciliter leur identification dans les pages XML, ils peuvent comprendre une balise spéciale et un nom de fonction permettant d'identifier un port logique de l'étage d'accès 410 pour le routage de la requête de fusion correspondante (ce nom est associé à l'un des modules d'accès 4100-4104 et à un port logique de celui-ci auquel doit être envoyée la requête ce fusion correspondante). Leur syntaxe est par exemple la suivante : « fonction (para1, ..., paraN) », où « % » est la balise caractéristique des codes de fusion « fonction » est le nom de fonction, et para1, ..., paraN césignent les N paramètres associés (N ≥ 0). Certains de ces paramètres associés peuvent eux-mêmes être des codes de fusion, les parenthèses permettant de séparer les codes de fusion imbriqués selon une structure arborescerte.

La figure 4 montre schématiquement les composants de l'étage de multiplexage de services 420 du serveur proxy 400. Chaque page reçue de l'étage d accès 410 est analysée par un moteur d'analyse et de fusion 421. L'operation de fusion consiste à remplacer les codes de fusion, présents en association avec d'éventuels paramètres dans une page reçue d'un module d'accès 4100-4104, par des données de fusion consistant en des données balisées ou un lien.

Cette opération de fusion ne nécessite aucune connaissance de l'organisation des services en cause au niveau de l'étage de multiplexage 420. Les codes de fusion peuvent être repérés sans effectuer d'analyse détaillée (« parsing ») en détectant simplement les balises « % » éventuellement presents dans la page reçue. Lorsque le moteur d'analyse 421 repère ainsi un code de fusion, il interroge une table de correspondance 422 sur la base du nom de fonction du code, ce qui lui permet d'identifier le port logique de l'étage d'accès 410 où acheminer la requête de fusion. Celle-ci peut être formulée très simplement en recopiant le code de fusion avec ses paramètres et en identifiant l'abonné concerné. A réception des données de fusion retournées pour cet abonné par le serveur de données de fusion 414 du module d'accès interrogé, le moteur d'analyse et de fusion 421 les substitue au code de fusion précédemment repéré.

Les correspondances (nom de fonction de code de fusion, port logique de l'étage d'accès) sont enregistrées dans la table 422 lors d'une procédure d'installation des modules d'accès 4100-4104, au cours de laquelle ceux-ci déclarent à l'étage de multiplexage 420 les noms de fonction des codes de fusion traités par leurs serveurs de données de fusion respectifs 414 en indiquant les ports logiques associés. Si un code de fusion détecté ne figure pas dans la table de correspondance 422, le moteur d'analyse et de fusion 421 supprime simplement ce code de la page XML traitée.

Au cours de la même procédure d'installation, les modules d'accès 4100-4104 déclarent à l'étage de multiplexage 420 les identités « process_id » des processus pris en compte par leurs serveurs de pages respectifs 416 en indiquant les ports logiques associés. Ceci permet à l'étage de multiplexage 420 d'enregistrer les correspondances entre ces identités « process_id » et ces ports logiques dans une autre table 423.

L'étage de multiplexage 420 comporte un module de routage 424 qui reçoit les adresses de pages reçues de l'étage de présentation 430 avec les primitives GET_URL à la suite d'événements détectés au niveau des terminaux. Le module de routage 424 interroge la table de correspondance 423 sur la base des identités « process_id » contenues dans ces adresses pour déterminer le port logique de l'étage d'accès 410 où la requête de page doit être acheminée, et il transmet cette requête accompagnée des paramètres correspondants.

Chaque création d'association d'un couple (terminal physique, abonné) par l'étage de présentation 430 donne lieu à une requête d'ouverture de session d'abonné reçue par un module de gestion des abonnés 425 de l'étage de multiplexage 420 (primitive OPEN_SESSION). Ce module 425 fonctionne avec une table 426 d'enregistrement des abonnés pour lesquels une session est ouverte. La requête d'ouverture de session d'abonné contient des informations indiquant entre autres un identifiant d'abonné (par exemple son numéro d'appel téléphonique) et un port logique de l'étage de présentation pour l'envoi des pages destinées à l'abonné. Elle contient de plus des informations relatives à l'authentification de l'abonné, comme par exemple un mot de passe saisi par ce dernier. Le module 425 interroge la table 426 afin de s'assurer que l'abonné n'y est pas déjà enregistré, auquel cas il retourne un acquittement négatif NACK qui est transmis à l'étage de présentation 430. Dans le cas contraire, il crée un enregistrement dans la table 426 incluant les informations contenues dans la requête d'ouverture de session, puis renvoie un acquittement positif ACK à destination de l'étage de présentation et du terminal. Un mécanisme de suppression d'un enregistrement est aussi prévu, par exemple, dans le cas d'une dissolution d'un couple (terminal, abonné) qui donne lieu à l'envoi par l'étage de présentation d'une requête de fermeture de session d'abonné à destination du module 425 (primitive CLOSE_SESSION)

La réception d'un acquittement positif ACK par l'étage de présentation 430 déclenche une requête de page d'accueil par défaut vers l'étage de multiplexage 420. Cette requête peut être formulée sous forme de l'adresse de la page demandée accompagnée de paramètres correspondant à l'abonné (numéro d'abonné, mot de passe) et aux paramètres d'adressage de son terminal sur le LAN pour l'acheminement de la voix et des données (paramètres réseau tels que l'adresse IP, ports UDP, etc.), et relayée comme les autres adresses de page par le module de routage 424 vers l'étage d'accès 410.

Cette page d'accueil par défaut peut notamment être générée par le module d'accès 4100 associé au serveur de téléphonie 200 Elle peut décrire une mire d'accueil offrant par exemple les différents services offerts par les serveurs dédiés connectés 200-204, et précisant à l'abonné son contexte courant téléphonique. Les informations (liens) relatives aux services disponibles contiennent notamment des adresses de pages destinées à être transmises par les modules d'accès 4100-4104 sur requête du service Ainsi, lorsque l'abonné sélectionne par exemple le service de téléphonie, l'étage de présentation 430 transmet à l'étage de multiplexage 420, dans le cadre de la session ouverte avec l'abonné, l'adresse de page contenue dans le lien sélectionné. Connaissant cette session, le module de gestion des abonnés 425 peut renseigner le module de routage 424 pour que la requête de page soit transmise au module d'accès 4100 en indiquant l'identité de l'abonné, le port logique ayant été obtenu dans la table 423.

Les modules de gestion des abonnés 425 et de routage 424 interviennent de la même manière pour les différentes requêtes de pages émanant de l'étage de présentation.

Ainsi, le traitement de ces requêtes par l'étage de multiplexage 420 ne nécessite aucune connaissance du service concerné par la requête Le module de routage 424 se contente de solliciter un port logique en passant en arguments les informations contenues dans les données d'adresse reçues de l'étage de présentation ainsi que l'identification de l'abonné, sans analyser le contenu de la requête ou l'identité du service qui la traite. Une fois la requête parvenue au module 4100-4104 de l'étage d'accès 410, elle est servie comme expliqué ci-dessus, ce qui donne lieu à l'envoi par ce module d'accès d'une nouvelle page XML accompagnée d'informations d'identification de l'abonné. Cette page XML est reçue par le moteur d'analyse et de fusion 421 qui l'analyse et opère les fusions requises le cas échéant, comme indiqué précédemment.

Le module de gestion des abonnés 425 coopère également avec le module d'analyse et de fusion 421 pour acheminer les pages traitées dans le cadre des sessions ouvertes avec les différents abonnés. Le module 425 interroge la table 426 pour déterminer à partir des informations d'identification d'abonné accompagnant chaque page XML le port logique correspondant à la session en cours avec l'abonné, vers lequel il achemine la page traitée (primitive SEND_PAGE).

A titre d'exemple, une page XML générée par le module d'accès 4101 associé au serveur d'annuaire 201 peut inclure des données balisées telles que :
$label/name=DUPONT
$label/firstname=PAUL
$label/phonenumber=78778
$label/mailaddress=DUPONT@MATRANORTEL
%call(78778, MakeCall)
%mail(DUPONT@MATRANORTEL, SendMail).
Dans cet exemple, les quatre premières lignes décrivent des éléments à présenter à l'abonné, repérés par la balise « $label », à savoir le nom d'un abonné répertorié dans l'annuaire (Dupont), son prénom (Paul), son numéro de téléphone (78778) et son adresse de messagerie (dupont@matranortel). L'étage de présentation adoptera le mode d'affichage de ces éléments qui convient au terminal utilisé par l'abonné Les deux dernières lignes comportent des codes de fusion repérés par la balise « % ». Le code « %call (78778, MakeCall) » détecté par le moteur d'analyse et de fusion 421 engendre une requête de fusion vers le module d'accès 4100 associé au serveur de téléphonie, qui y répond par exemple en retournant les données de fusion :
<link href = "cs_server://1049600?phonenumber=73778"
title = $label/MakeCall">,
qui représentent un lien entre la donnée balisée « $label/MakeCall », qui génèrera la présentation à l'abonné d'une commande d'appel (touche virtuelle) et l'adresse de page « cs_server://1049600 » qui correspond à une page d'appel téléphonique gérée par le module d'accès 4100 associé au serveur de téléphonie 200, avec le paramètre d'appel « phonenumber=78778 » désignant le numéro appelé. De même, le code « %mail (DUPONT@MATRANORTEL, SendMail) » détecté par le moteur d'analyse et de fusion 421 engendre une requête de fusion vers le module d'accès 4102 associé au serveur de messagerie, qui y répond par exemple en retournant les données de fusion :
<link href =
"mail_server://1249600?mailaddress=DUPONT@MATRANORTEL"
title = $label/SendMail">,
qui représentent un lien entre la donnée balisée « $label/SendMail », qui génèrera la présentation à l'abonné d'une commande d'envoi de message (touche virtuelle) et l'adresse de page « mail_server://1249600 » qui correspond à une page d'envoi de message gérée par le module d'accès 4102 associé au serveur de messagerie 202, avec le paramètre « mailaddress=DUPONT@MATRANORTEL » désignant l'adresse d'envoi du message.

La figure 5 est une illustration d'un exemple d'affichage généré sur l'écran d'un terminal à la suite de la production de la page précédente, traitée par le moteur d'analyse et de fusion 421. L'activation par l'abonné de l'une des touches virtuelles T déclenchera alors la remontée de l'adresse de page « cs_server://1049600 » ou « mail_server://1249600 » de l'étage de présentation 430 vers l'étage de multiplexage 420, puis une requête de page vers le module d'accès 4100 ou 4102 pour initialiser l'établissement de l'appel demandé ou l'envoi du message.

L'opération de fusion peut impliquer plusieurs requêtes de fusion successives lorsque des codes de fusion imbriqués sont présents dans la page. Dans ce cas, la hiérarchie des parenthèses permet au moteur d'analyse 421 de séparer les codes de fusion et de commencer par générer les requêtes de fusion pour les codes intérieurs, les données de fusion intermédiaires consistant alors en des paramètres que le moteur d'analyse et de fusion 421 substitue aux codes de fusion correspondants.

A titre d'exemple, une page XML générée par l'étage d'accès 410 peut inclure le code de fusion suivant :
%call(%last_outgoing_call, Bis).
Dans cet exemple, le code de fusion « %last_outgoing_call », traité en premier, correspond à un port logique du serveur de données de fusion 414 du module d'accès 4104 associé au serveur journal. A réception de la requête de fusion adressée à ce port logique, le module d'accès 4104 interroge le serveur journal 204 pour récupérer le dernier numéro de téléphone appelé par l'abonné, et ce numéro est retourné à l'étage de multiplexage en tant que données de fusion, par exemple « 78722 ». Le code de fusion « %call (78722, Bis) » résultant de cette première étape est ensuite traité à son tour au moyen d'une requête de fusion vers le module d'accès 4100 qui retourne de la même manière que dans l'exemple précédent, les données balisées :
<link href = "cs_server://1049600?phonenumber=78722"
title = $label/Bis">,
permettant de présenter à l'abonné une touche virtuelle correspondant à la fonction de répétition du dernier appel (touche bis).

On voit que le moteur 421 permet à l'étage de multiplexage 420 de fusionner des objets correspondant à des services différents sans avoir de connaissance a priori des services concernés. Ainsi, une page reçue de l'étage 410 en provenance d'un premier module d'accès et contenant une action correspondant à un service dont le traitement a lieu au sein d'un second module d'accès est traitée par l'étage de multiplexage 420 de telle sorte qu'elle ne contienne plus de codes de fusion, mais des liens et/ou des données balisées décrivant des éléments à présenter, et qu'elle soit exploitable par l'étage de présentation 430 sans qu'il y ait besoin d'établir de dialogue entre les différents serveurs 200-204 ou modules d'accès 4100-4104.

L'incorporation des codes de fusion aux pages XML délivrées par l'étage d'accès n'implique pas non plus qu'un module d'accès connaisse la structure des services offerts par les serveurs dédiés auxquels il n'est pas associé. Dans le premier exemple ci-dessus, pour insérer les codes « %call(78778, MakeCall) » et « %mail (DUPONT@MATRANORTEL, SendMail) », le serveur de pages 416 du module d'accès 4101 associé au serveur d'annuaire 201 a simplement besoin de savoir que « 78 778 » est un numéro de téléphone appelable et « DUPONT@MATRANORTEL » une adresse de messagerie (ce qui fait partie du métier annuaire), sans connaître comment les serveurs 200 et 202 traitent les appels téléphoniques et l'envoi des messages.

## Revendications

1. Dispositif de supervision de terminaux reliés à un réseau de communication (300) pour fournir à des abonnés utilisant les terminaux (100-103) différents services gérés par plusieurs serveurs dédiés (200-204), le dispositif (400) comprenant des moyens (440) d'interface avec le réseau, un étage (430) de présentation de services aux terminaux à travers lesdits moyens d'interface, un étage (420) de multiplexage de services communiquant avec l'étage de présentation, et un étage (410) d'accès aux services communiquant avec l'étage de multiplexage et comportant plusieurs mocules d accès (4100-4104) associés chacun à un serveur dédié respectif,
dans lequel chaque module d'accès (4100-4104) est agencé pour délivrer des pages de données balisées à l'étage de multiplexage (420) en réponse a des messages entrants issus du serveur dédié associé (200-204) et/ou à des requêtes de page issues de l'étage de multiplexage, et pour delivrer des données de fusion à l'étage de multiplexage en réponse à des requêtes de fusion, chaque page délivrée étant associée à un abonné avec lequel l'étage de multiplexage a une session de communication en cours par l'intermédiaire de l'étage de présentation, certaines au moins des pages délivrées à l'étage de multiplexage contenant des codes de fusion se rapportant à des services,
dans lequel l'étage de multiplexage (420) comprend des moyens (421) de traitement de chaque page reçue de l'étage d'accès (410) pour détecter les codes de fusion, adresser une requête de fusion au module d'acces (4100-4104) associé au serveur dédié gérant le service auquel se rapporte chaque code de fusion détecté, substituer les données de fusion délivrées par ledit module d'accès en réponse à la requête de fusion à un champ de la page incluant le code de fusion détecté, et fournir la page traitée à l'étage de présentation (430) dans le cadre de la session en cours avec l'abonné associé, chaque page fournie à l'étage de présentation contenant des dcnnees balisées décrivant, selon un format indépendant des terminaux (100-103). des éléments d'interaction avec l'abonné associé,
dans lequel l'étage de présentation (430) comprend des moyens de contrôle de terminaux (433-437) interprétant chaque page reçue de l'étage de multiplexage (420) dans le cadre d'une session en cours avec un abonné utilisant l'un des terminaux (100-103) de façon à générer des commandes adaptées à la présentation sur le terminal d'éléments d'interaction décrits par les données balisées de la page,
et dans lequel l'étage de multiplexage (420) comprend en outre des moyens de routage (424) pour recevoir des adresses de page depuis l'étage de présentation dans le cadre d'une session en cours avec un abonné, identifier un module d'accès (4100-4104) auquel est destinée l'adresse de page reçue et transmettre une requête de page correspondante au module d'accès identifié.

2. Dispositif selon la revendication 1, dans lequel les données balisées contenues dans certaines au moins des pages fournies à l'étage de présentation (430) décrivent, en plus des éléments d'interaction avec l'abonné associé, au moins un lien entre l'un desdits éléments d'interaction et une adresse de page, et dans lequel les moyens de contrôle de terminaux (433-437) de l'étage de présentation sont agencés pour associer chaque lien d'une page reçue de l'étage de multiplexage (420) dans le cadre d'une session en cours avec un abonné utilisant l'un des terminaux (100-103) à un événement pouvant se produire au niveau du terminal, et pour retourner l'adresse de page dudit lien à l'étage de multiplexage dans le cadre de ladite session en réponse à une occurrence dudit événement.

3. Dispositif selon la revendication 2, dans lequel les liens décrits dans les données balisées contenues dans les pages fournies à l'étage de présentation (430) comprennent des liens statiques que les moyens de contrôle (433-437) associent à des événements prédéterminés, pouvant se produire au niveau des terminaux (100-103) et des liens dynamiques associés à des éléments présentés dynamiquement au niveau des terminaux (100-103).

4. Dispositif selon la revendication 2 ou 3, comprenant des moyens pour générer une page d'accueil à l'issue d'une ouverture de session entre l'étage de multiplexage (420) et un abonné utilisant l'un des terminaux (100-103), la page d'accueil étant traitée par l'étage de présentation (430) et contenant des liens avec des adresses de page destinées à différents modules de l'étage d'accès (410).

5. Dispositif selon la revendication 4, dans lequel les moyens pour générer la page d'accueil sont compris dans l'un des modules d'accès (4100-4104).

6. Dispositif selon l'une quelconque des revendications précédentes, dans lequel lesdites pages de données balisées sont des pages XML établies selon un format commun à l'ensemble du dispositif.

7. Dispositif selon l'une quelconque des revendications précédentes, dans lequel l'étage de multiplexage (420) comprend des moyens de gestion d'abonnés (425) coopérant avec une mémoire (426) où sont stockées des données se rapportant aux abonnés.

8. Dispositif selon la revendication 7, dans lequel les données se rapportant à un abonné stockées dans ladite mémoire (426) comprennent un identifiant d'abonné et des paramètres d'authentification, que les moyens de gestion d'abonnés (425) comparent à des paramètres fournis par l'abonné lors d'une ouverture de session avec ledit abonné.

9. Dispositif selon l'une quelconque des revendications précédentes, dans lequel les moyens de routage (424) de l'étage de multiplexage (420) coopèrent avec une mémoire (423) contenant une table de correspondance entre des portions des adresses de page reçues depuis l'étage de présentation (430) et des ports logiques respectifs de l'étage d'accès (410) associés aux modules d'accès (4100-4104) auxquels les requêtes de page correspondantes sont à transmettre.

10. Dispositif selon l'une quelconque des revendications précédentes, dans lequel les moyens de traitement (421) de l'étage de multiplexage (420) coopèrent avec une mémoire (422) contenant une table de correspondance entre des portions des codes de fusion et des ports logiques respectifs de l'étage d'accès (410) associés aux modules d'accès (4100-4104) auxquels les requêtes de fusion correspondantes sont à transmettre

11. Dispositif selon l'une quelconque des revendications précédentes, dans lequel au moins un des modules d'accès (4100-4104) comprend une bibliothèque de pages statiques (417) d'où sont extraites au moins en partie des pages de données balisées délivrées à l'étage de multiplexage (420) en réponse à des requêtes de page, sans échange avec le serveur dédié associé (200-204).

## Claims

1. A device for supervising terminals connected to a communication network (300) for supplying subscribers using the terminals (100-103) with various services managed by a plurality of dedicated servers (200-204), the device (400) comprising means (440) of interfacing with the network, a stage (430) for presenting services to the terminals through said interfacing means, a service multiplexing stage (420) communicating with the presentation stage, and a service access stage (410) communicating with the multiplexing stage and comprising a plurality of access modules (4100-4104) each associated with a respective dedicated server,
wherein each access module (4100-4104) is arranged to deliver tagged data pages to the multiplexing stage (420) in response to incoming messages from the associated dedicated server (200-204) and/or to page requests from the multiplexing stage, and to deliver merge data to the multiplexing stage in response to merge requests, each delivered page being associated with a subscriber with which the multiplexing stage has a communication session in progress through the presentation stage, whereby some at least of the delivered pages to the multiplexing stage contain merge codes pertaining to services,
wherein the multiplexing stage (420) comprises means (421) for processing each page received from the access stage (410) to detect the merge codes, address a merge request to the access module (4100-4104) associated with the dedicated server managing the service to which each detected merge code pertains, substitute the merge data delivered by said access module in response to the merge request for a field of the page including the detected merge code, and supply the processed page to the presentation stage (430) within the framework of the session in progress with the associated subscriber, whereby each page supplied to the presentation stage contains tagged data describing, according to a format independent of the terminals (100-103), elements of interaction with the associated subscriber,
wherein the presentation stage (430) comprises terminal control means (433-437) for interpreting each page received from the multiplexing stage (420) within the framework of a session in progress with a subscriber using one of the terminals (100-103) to generate commands adapted to the presentation on the terminal of interaction elements described by the tagged data of the page,
and wherein the multiplexing stage (420) further comprises routing means (424) for receiving page addresses from the presentation stage within the framework of a session in progress with a subscriber, identifying an access module (4100-4104) for which the page address received is intended and transmitting a corresponding page request to the identified access module.

2. The device as claimed in claim 1, wherein the tagged data contained in some at least of the pages supplied to the presentation stage (430) describe, in addition to the elements of interaction with the associated subscriber, at least one link between one of said interaction elements and a page address, and wherein the terminal control means (433-437) of the presentation stage are arranged to associate each link of a page received from the multiplexing stage (420) within the framework of a session in progress with a subscriber using one of the terminals (100-103) with an event which may occur at the terminal, and to return the page address of said link to the multiplexing stage within the framework of said session in response to an occurrence of said event.

3. The device as claimed in claim 2, wherein the links described in the tagged data contained in the pages supplied to the presentation stage (430) comprise static links which the control means (433-437) associate with predetermined events which can occur at the terminals (100-103) and dynamic links associated with elements presented dynamically at the terminals (100-103).

4. The device as claimed in claim 2 or 3, comprising means for generating a home page on completion of an opening of session between the multiplexing stage (420) and a subscriber using one of the terminals (100-103), whereby the home page is processed by the presentation stage (430) and contains links with page addresses intended for various modules of the access stage (410).

5. The device as claimed in claim 4, wherein the home page generation means are included in one of the access modules (4100-4104).

6. The device as claimed in any one of the preceding claims, wherein said tagged data pages are XML pages established according to a format common to the whole device.

7. The device as claimed in any one of the preceding claims, wherein the multiplexing stage (420) comprises subscriber management means (425) cooperating with a memory (426) where data pertaining to the subscribers are stored.

8. The device as claimed in claim 7, wherein the data pertaining to a subscriber which are stored in said memory (426) comprise a subscriber identifier and authentication parameters, which the subscriber management means (425) compare with parameters supplied by the subscriber upon an opening of session with said subscriber.

9. The device as claimed in any one of the preceding claims, wherein the routing means (424) of the multiplexing stage (420) co-operate with a memory (423) containing a lookup table for matching portions of the page addresses received from the presentation stage (430) with respective logic ports of the access stage (410) associated with the access modules (4100-4104) to which the corresponding page requests are to be sent.

10. The device as claimed in any one of the preceding claims, wherein the processing means (421) of the multiplexing stage (420) co-operate with a memory (422) containing a lookup table for matching portions of the merge codes with respective logic ports of the access stage (410) associated with the access modules (4100-4104) to which the corresponding merge requests are to be sent.

11. The device as claimed in any one of the preceding claims, wherein at least one of the access modules (4100-4104) comprises a library of static pages (417) from which are extracted at least in part tagged data pages delivered to the multiplexing stage (420) in response to page requests, without exchange with the associated dedicated server (200-204).

## Patentansprüche

1. Überwachungsvorrichtung für mit einem Kommunikationsnetz (300) verbundene Endgeräte, um Teilnehmern, welche die Endgeräte (100-103) nutzen, verschiedene durch mehrere dedizierte Server verwaltete Dienste zu liefern, wobei die Vorrichtung (400) umfasst: Schnittstellenmittel (440) mit dem Netz, eine Präsentations-Stufe (430) der Dienste für die Endgeräte über die Schnittstellenmittel, eine Multiplexing-Stufe (420) von Diensten, welche mit der Präsentations-Stufe kommuniziert und eine Zugangs-Stufe (410) zu den Diensten, welche mit der Multiplexing-Stufe kommuniziert und mehrere Zugangsmodule (4100-4104) umfasst, von denen jedes einem jeweiligen dedizierten Server zugeordnet ist,
bei der jedes Zugangsmodul (4100-4104) eingerichtet zum Ausliefern von Seiten markierter Daten an die Multiplexing-Stufe (420) als Antwort auf eingehende Mitteilungen, welche vom dedizierten zugeordneten Server (200-204) stammen, und/oder auf Seiten-Anfragen, welche von der Multiplexing-Stufe stammen, und zum Ausliefern von Fusionsdaten an die Multiplexing-Stufe als Antwort auf Fusions-Anfragen, wobei jede gelieferte Seite einem Teilnehmer zugeordnet ist, mit welchem die Multiplexing-Stufe eine Kommunikations-Session am Laufen hat unter Vermittlung der Präsentations-Stufe, wobei wenigstens bestimmte an die Multiplexing-Stufe ausgelieferte Seiten Fusions-Codierungen enthalten, welche sich auf Dienste beziehen,
bei der die Multiplexing-Stufe (420) Mittel (421) zur Verarbeitung jeder von der Zugangs-Stufe (410) empfangenen Seite umfasst zum Erfassen der Fusions-Codierungen, zum Richten einer Fusions-Anfrage an das Zugangs-Modul (4100-4104), welches dem dedizierten Server zugeordnet ist, der den Dienst verwaltet, auf den sich jede erfasste Fusions-Codierung bezieht, zum Einsetzen der durch das Zugangsmodul als Antwort auf die Fusions-Anfrage gelieferten Fusions-Daten in ein Feld der Seite, welche die erfasste Fusions-Codierung einschließt, und zum Liefern der verarbeiteten Seite an die Präsentations-Stufe (430) im Rahmen der mit einem zugeordneten Teilnehmer laufenden Session, wobei jede an die Präsentations-Stufe ausgelieferte Seite markierte Daten enthält, welche Interaktions-Elemente mit dem zugeordneten Teilnehmer entsprechend einem unabhängigen Format der Endgeräte (100-103) beschreiben,
bei der die Präsentations-Stufe (430) Mittel zur Prüfung der Endgeräte (433-437) umfasst, welche jede von der Multiplexing-Stufe (420) im Rahmen der mit einem zugeordneten Teilnehmer laufenden Session empfangene Seite interpretiert unter Verwendung eines der Endgeräte (100-103), so dass an die Präsentation auf dem Endgerät angepasste Befehle erzeugt werden von Interaktions-Elementen, welche durch die markierten Daten der Seite beschrieben sind,
und bei der die Multiplexing-Stufe (420) im weiteren Routing-Mittel (424) umfasst zum Empfangen von Seiten-Adressen von der Präsentationsstufe im Rahmen einer mit einem zugeordneten Teilnehmer laufenden Session, zum Identifizieren eines Zugangs-Moduls (4100-4104), für welches die Adresse der empfangenen Seite bestimmt ist, und zum Übertragen einer entsprechenden Seiten-Anfrage an das identifizierte Zugangs-Modul.

2. Vorrichtung nach Anspruch 1, bei der die markierten Daten, welche in wenigstens bestimmten an die Präsentations-Stufe (430) gelieferten Seiten enthalten sind, über Interaktions-Eiemente mit einem zugeordneten Teilnehmer hinaus wenigstens eine Verknüpfung zwischen einem der Interaktions-Elemente und einer Seiten-Adresse beschreiben, und bei der die Mittel (433-437) zur Endgerät-Überwachung der Präsentations-Stufe eingerichtet sind, jede Verknüpfung einer von der Multiplexing-Stufe (420) im Rahmen einer Session mit einem eines der Endgeräte (100-103) nutzenden Teilnehmer empfangenen Seite einem Ereignis zuzuordnen, welches sich auf der Ebene des Endgeräts erzeugen kann, und um die Seiten-Adresse der Verknüpfung an die Multiplexing-Stufe im Rahmen der Session zurück zu geben als Antwort auf ein Auftreten des Ereignisses.

3. Vorrichtung nach Anspruch 2, bei der die in den markierten Daten beschriebenen Verknüpfungen, welche in den an die Präsentation-Stufe gelieferten Seiten enthalten sind, statische Verknüpfungen umfassen, welche die Überwachungsmittel (433-437) vorbestimmten Ereignissen zuordnen, die sich auf der Ebene der Endgeräte (100-103) erzeugen können, und dynamische Verknüpfungen umfassen, welche präsentierten Elementen dynamsich auf der Ebene der Endgeräte (100-103) zugeordnet werden.

4. Vorrichtung nach Anspruch 2 oder 3, umfassend Mittel zum Erzeugen einer Zugangs-Seite nach der Eröffnung einer Session zwischen der Multiplexing-Stufe (420) und einem Teilnehmer, welcher eines der Endgeräte (100-103) nutzt, wobei die Zugangs-Seite durch die Präsentations-Stufe (430) verarbeitet wird und Verknüpfungen mit Seiten-Adressen enthält, welche für unterschiedliche Module der Zugangs-Stufe (410) bestimmt sind.

5. Vorrichtung nach Anspruch 4, bei der die Mittel zum Erzeugen einer Zugangsseite in einem der Zugangs-Module (4100-4104) enthalten sind.

6. Vorrichtung nach einem der vorhergehenden Ansprüche, bei der Seiten der markierten Daten XML-Seiten sind, welche entsprechend einem der Gesamtheit der Vorrichtung gemeinsamen Format aufgebaut sind.

7. Vorrichtung nach einem der vorhergehenden Ansprüche, bei der die Multiplexing-Stufe (420) Mittel zur Verwaltung von Teilnehmern (425) umfasst, welche mit einem Speicher (426) zusammen arbeiten, in dem sich auf die Teilnehmer beziehende Daten gespeichert sind.

8. Vorrichtung nach Anspruch 7, bei der die sich auf einen Teilnehmer beziehenden Daten, welche in dem Speicher (426) gespeichert sind, einen Teilnehmer-Identifikator und Authentifizierungs-Parameter umfassen, welche die Mittel zur Verwaltung von Teilnehmern (425) mit Parametern vergleichen, welche vom Teilnehmer bei der Eröffnung einer Session mit diesem Teilnehmer geliefert werden.

9. Vorrichtung nach einem der vorhergehenden Ansprüche, bei der die Routing-Mittel (424) der Multiplexing-Stufe (420) mit einem Speicher (423) zusammenarbeiten, welcher eine Zuordnungstabelle zwischen von der Präsentations-Stufe empfangenen Bereichen der Seiten-Adressen und jeweiligen logischen Ports der Zugangs-Stufe (410) enthält, die den Zugangsmodulen (4100-4104) zugeordnet sind, an welche entsprechende Seiten-Anfragen zu übertragen sind.

10. Vorrichtung nach einem der vorhergehenden Ansprüche, bei der die Verarbeitungsmittel (421) der Multiplexing-Stufe (420) mit einem Speicher (422) zusammenarbeiten, welcher eine Zuordnungstabelle zwischen Fusions-Codierungs-Bereichen und jeweiligen logischen Ports der Zugangs-Stufe (410) enthält, die den Zugangs-Modulen (4100-4104) zugeordnet sind, an welche entsprechende Fusions-Anfragen zu übertragen sind.

11. Vorrichtung nach einem der vorhergehenden Ansprüche, bei der wengisten eines der Zugangs-Module (4100-4104) eine Bibliothek von statischen Seiten (417) umfasst, von wo wenigstens teilweise Seiten von markierten Daten herausgenommen werden, welche an die Multiplexing-Stufe (420) als Antwort auf Seiten-Anfragen geliefert werden ohne Austausch mit dem zugeordneten dedizierten Server (200-204).
